# EUROPEAN PATENT APPLICATION

(11) **EP 4 779 368 A1**
(43) Date of publication of application: **22.07.2026**
(21) Application number: 24878788.9
(22) Date of filing: 23.09.2024
(51) Int. Cl.: G02B 6/02, G01B 11/00

(54) **HOLLOW-CORE FIBER HAVING AZIMUTH MARK AND HOLLOW-CORE FIBER END FACE DETECTION METHOD**

(30) Priority: 19.10.2023 CN 202311354009
(71) Applicant: Yangtze Optical Fibre and Cable Joint Stock Limited Company, Wuhan, Hubei 430074 (CN)
(72) Inventor: LI, Peng, Wuhan, Hubei 430074 (CN); ZHANG, Lei, Wuhan, Hubei 430074 (CN); LUO, Jie, Wuhan, Hubei 430074 (CN); DING, Yuxin, Wuhan, Hubei 430074 (CN); MAO, Mingfeng, Wuhan, Hubei 430074 (CN)
(74) Representative: Lorenz Seidler Gossel Part. mbB
(86) International application number: PCT/CN2024/120320
(87) International publication number: WO 2025/082140

(57) **Abstract**

An azimuthally marked hollow-core optical fiber and a method for end-face detection of the hollow-core optical fiber are disclosed. The optical fiber includes: a cladding hollow-core sleeve, and a plurality of circumferentially uniformly disposed anti-resonant microstructure units arranged on and attached to an inner wall of the cladding hollow-core sleeve, and a hollow area surrounded by the anti-resonant microstructure units is an optical fiber core; and there is a difference between an azimuthal angle of at least one anti-resonant microstructure unit and an azimuthal angle of at least one other anti-resonant microstructure unit. According to the azimuthally marked hollow-core optical fiber and the method for end-face detection of the hollow-core optical fiber, by using an azimuthal mark, under the premise of not increasing the complexity of optical fiber preparation with negligible impact on transmission performance of the optical fiber, anti-resonant microstructure units in the hollow-core optical fiber can be distinguished quickly, which facilitates on-line control of the geometric uniformity of the anti-resonant microstructure units.

## Description

### Field of the Invention

The present disclosure relates to the field of optical communication, and in particular, to an azimuthally marked hollow-core optical fiber and a method for end-face detection of the hollow-core optical fiber.

### Background of the Invention

Hollow-core micro-structured optical fibers feature a simple structure, hollow-core single-mode light guidance, and a broad transmission spectrum, and have important applications in fields such as light-matter interaction, nonlinear optics, gas detection, gas laser generation, and optofluidics. A large air-core light guidance exhibits ultra-low Rayleigh scattering, a low nonlinear coefficient, and tunable chromatic dispersion, offering a higher laser-induced damage threshold, so that it is potentially applied in high-power laser transmission, ultraviolet/mid-infrared light transmission, pulse compression, and optical soliton transmission. The air core has ultra-low loss, low chromatic dispersion, low nonlinearity, and a propagation speed close to the light speed, and can realize the transmission of hollow-core optical fiber communications and the development of devices for communications, thereby laying a foundation for the construction and development of the next-generation ultra-high-capacity, low-latency, high-speed optical communication systems.

Although hollow-core optical fibers have significant advantages in design and application, the transmission loss thereof is higher than that of conventional silica optical fibers all the time. Recently, it has been found that anti-resonance-based hollow-core optical fibers, when the structure is designed properly, can effectively reduce the transmission loss, and have potential of being used as optical fibers for ultra-long-haul communications. Further reduction of attenuation is a critical issue in the fabrication of hollow-core microstructure optical fibers.

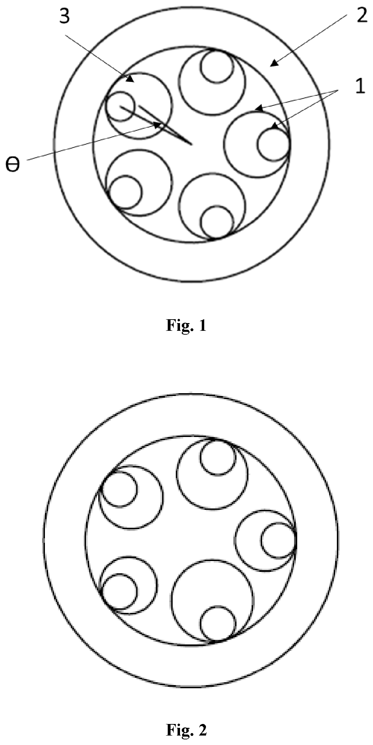

Although known hollow-core anti-resonant optical fibers, in particular optical fibers having nested structural elements, can significantly reduce attenuation of the optical fibers, the fabrication process of the hollow-core anti-resonant optical fibers is essentially different from that of conventional solid-core optical fibers. The microscopic three-dimensional structure of hollow-core optical fibers is the basis for light guidance. To form or maintain a specific microscopic structure, a continuous supply of gas is required during optical fiber drawing. Due to factors such as inhomogeneity of the raw materials, deviations in the process of stacking of nested structural elements, and non-uniform distribution of thermal fields during optical fiber drawing, dimensional variation occurs among the anti-resonant structural elements formed by the drawn hollow-core anti-resonant optical fibers, as shown in Fig. 1. Such non-uniformity in geometric structures would greatly affect the transmission loss of the hollow-core anti-resonant optical fibers. It is precisely because this fabrication approach is disruptive compared to the fabrication approach of existing solid-core optical fibers, a conventional approach of increasing the size of a preform of the optical fiber used for the solid-core optical fibers cannot be used to improve geometric non-uniformity.

### Summary of the Invention

In view of the above defects and improvement needs of the prior art, the present disclosure provides an azimuthally marked hollow-core optical fiber and a method for end-face detection of the hollow-core optical fiber. The objective is to mark an end face of the optical fiber under the premise of ensuring the transmission performance of the optical fiber by adjusting an azimuthal angle of an anti-resonant microstructure unit having multiple negative-curvature layers and identifying respective anti-resonant microstructure units, which can be used to detect the geometric uniformity of the optical fiber, thereby solving the technical problem that the geometric uniformity cannot be detected because it is difficult to distinguish the anti-resonant units of the existing hollow-core optical fiber from one another.

In order to achieve the above objective, according to one aspect of the present disclosure, an azimuthally marked hollow-core optical fiber is provided, which includes: a cladding hollow-core sleeve, and a plurality of circumferentially uniformly disposed anti-resonant microstructure units arranged on and attached to an inner wall of the cladding hollow-core sleeve, wherein a hollow area surrounded by the anti-resonant microstructure units is an optical fiber core;
the anti-resonant microstructure unit has multiple negative-curvature layers, a side away from the optical fiber core being defined as an inner side and a side close to the optical fiber core being defined as an outer side, and the azimuthal angle of the anti-resonant microstructure unit is an included angle formed by connecting three points: from a curvature center of an outermost negative-curvature layer to the geometric center of the optical fiber and then to a curvature center of an innermost negative-curvature layer;
there is a difference between an azimuthal angle of at least one anti-resonant microstructure unit and an azimuthal angle of at least one other anti-resonant microstructure unit.

Preferably, for the azimuthally marked hollow-core optical fiber, the difference between azimuthal angles is ≥1.5°.

Preferably, for the azimuthally marked hollow-core optical fiber, there is a difference between an azimuthal angle of a marked anti-resonant microstructure unit and azimuthal angles of all other anti-resonant microstructure units.

Preferably, for the azimuthally marked hollow-core optical fiber, the azimuthal angles of all other anti-resonant microstructure units are the same.

Preferably, for the azimuthally marked hollow-core optical fiber, the azimuthal angles of all other anti-resonant microstructure units are 0°.

Preferably, for the azimuthally marked hollow-core optical fiber, the azimuthal angle of the marked anti-resonant microstructure unit is Θ, wherein 1.5°≤Θ≤45°.

Preferably, for the azimuthally marked hollow-core optical fiber, the anti-resonant microstructure unit includes two layers of tangentially nested capillaries, wherein the azimuthal angle of the anti-resonant microstructure unit is an included angle formed by connecting three points: from a circular center of an inner-layer capillary to the geometric center of the optical fiber and then to a circular center of an outer-layer capillary.

Preferably, for the azimuthally marked hollow-core optical fiber, a position where capillaries of each of other anti-resonant microstructure units are tangential is attached to the inner wall of the cladding hollow-core sleeve.

Preferably, for the azimuthally marked hollow-core optical fiber, the cladding hollow-core sleeve has a circular shape, and the plurality of anti-resonant microstructure units have the same outer profiles.

According to another aspect of the present disclosure, a method for end-face detection of the hollow-core optical fiber is provided, which includes the following steps:
(1) cleaving the azimuthally marked hollow-core optical fiber at a preset position;
(2) imaging an end face, obtained by performing cleaving in step (1), by using transmission light or reflected light, so as to obtain an image of the end face of the optical fiber at the position;
(3) identifying an anti-resonant microstructure unit according to an azimuthal angle on the image of the end face obtained in step (2), so as to obtain images of respective anti-resonant microstructure units; and
(4) extracting geometric parameters from the images of the anti-resonant microstructure units obtained by performing identifying in step (3), so as to determine geometric uniformity of the hollow-core optical fiber.

In general, compared with the prior art, the above technical solutions conceived by the present disclosure can achieve the following beneficial effects:
The present disclosure provides an azimuthally marked hollow-core optical fiber and a method for end-face detection of the hollow-core optical fiber. By using an azimuthal mark, under the premise of not increasing the complexity of optical fiber preparation and hardly affecting the transmission performance of the optical fiber, anti-resonant microstructure units in the hollow-core optical fiber can be distinguished quickly, which facilitates on-line control of the geometric uniformity of the anti-resonant microstructure units and is beneficial for reducing the transmission loss of the hollow-core optical fiber; and meanwhile in the process of coupling the hollow-core optical fiber, it is convenient to identify different anti-resonant microstructure units, so as to reduce the coupling loss of the hollow-core optical fiber.

### Brief Description of the Drawings

Fig. 1 is a schematic diagram of a structure of a preform of an azimuthally marked hollow-core optical fiber provided in Embodiment 1 of the present disclosure;
Fig. 2 is a schematic diagram of an unmarked hollow-core optical fiber, which is used for making comparison with Embodiment 1;
Fig. 3 is a schematic diagram of pressure control in a process of drawing of a preform of the azimuthally marked hollow-core optical fiber provided in Embodiment 1 of the present disclosure;
Fig. 4 is a schematic diagram of pressure control in a process of drawing of a preform of the hollow-core optical fiber with two azimuthal marks provided in Embodiment 2 of the present disclosure;
Fig. 5 is a schematic diagram of pressure control in a process of drawing of a preform of the hollow-core optical fiber with azimuthal marks provided in Embodiment 3 of the present disclosure;

Throughout the accompanying drawings, same reference numerals indicate same elements or structures, wherein: 1 indicates an anti-resonant microstructure unit; 2 indicates a cladding hollow-core sleeve; 3 indicates a single marked anti-resonant microstructure unit used in Embodiment 1; 4 and 5 indicate two adjacent marked anti-resonant microstructure units used in Embodiment 2; and 6, 7, and 8 indicate three adjacent marked anti-resonant microstructure units used in Embodiment 3.

### Detailed Description of the Embodiments

In order to make the objective, technical solutions, and advantages of the present disclosure clearer, the present disclosure will be further described below in detail in conjunction with embodiments. It should be appreciated that specific embodiments described herein are only intended for explaining rather than limiting the present disclosure. In addition, technical features in respective embodiments of the present disclosure described below may be combined with each other as long as no conflicts are resulted thereby.

The azimuthally marked hollow-core optical fiber provided in the present disclosure includes a cladding hollow-core sleeve, and a plurality of circumferentially uniformly disposed anti-resonant microstructure units arranged on and attached to an inner wall of the cladding hollow-core sleeve, and a hollow area surrounded by the anti-resonant microstructure units is an optical fiber core; and the cladding hollow-core sleeve has a circular shape, and the plurality of anti-resonant microstructure units have the same outer profiles.

The number of the anti-resonant microstructure units is n which satisfies n≥3.

The anti-resonant microstructure unit has multiple negative-curvature layers, a side away from the optical fiber core being defined as an inner side and a side close to the optical fiber core being defined as an outer side, and an azimuthal angle is an included angle formed by connecting three points: from a curvature center of an outermost negative-curvature layer to the geometric center of the optical fiber and then to a curvature center of an innermost negative-curvature layer.

There is a difference between an azimuthal angle of at least one anti-resonant microstructure unit and an azimuthal angle of at least one other anti-resonant microstructure unit. All anti-resonant microstructure units may be identified by identifying the difference between azimuthal angles: first, the anti-resonant microstructure unit having a difference is identified, and then other anti-resonant microstructure units are identified by means of a position relative to the above anti-resonant microstructure unit having a difference. In order to conveniently identify the anti-resonant microstructure unit, it is required that the difference of the anti-resonant microstructure unit is above 1.5°, so as to clearly distinguish from an assembly error of the anti-resonant microstructure unit. That is, a deviation of the azimuthal angle of the anti-resonant microstructure unit is used as an identification of an azimuth of the hollow-core optical fiber, and the number of anti-resonant microstructure units whose azimuthal angle is deviated is m which satisfies m≥1.

The anti-resonant microstructure unit whose azimuthal angle is different from the azimuthal angles of all other anti-resonant microstructure units is easy to identify, and is called a marked anti-resonant microstructure unit.

The azimuthal angle of the anti-resonant microstructure unit affects the transmission performance of the hollow-core optical fiber to some degree, and preferably the azimuthal angle is ≤45°. When the azimuthal angle of the anti-resonant microstructure unit is 0°, the multiple negative-curvature layers are most likely to face the optical fiber core. Typically, two negative-curvature layers both face the optical fiber core, and theoretically have the best transmission performance. Therefore, in a preferred solution, except the marked anti-resonant microstructure unit, the azimuthal angles of all other anti-resonant microstructure units are 0°.

It is easily implementable to use a single marked anti-resonant microstructure unit. The marked anti-resonant microstructure unit is allowed to have an azimuthal angle different from azimuthal angles of all other anti-resonant microstructure units, and the azimuthal angles of all other anti-resonant microstructure units are the same. Then, the marked anti-resonant microstructure unit is identified much more easily, and other anti-resonant microstructure units are identified by means of a position relative to the marked anti-resonant microstructure unit.

However, the difference in the azimuthal angle of the marked anti-resonant microstructure unit also affects the transmission performance of the optical fiber. An excessively great difference in the azimuthal angle results in increasing of the transmission loss of the optical fiber on one hand, and on the other hand, the light propagation mode may deform because the cross-section of the optical fiber is asymmetric clearly. Thus, the azimuthal angle of the marked anti-resonant microstructure unit is Θ which satisfies 1.5°≤Θ≤45°, preferably 1.5°≤Θ≤15°, so as to maintain good transmission performance of the hollow-core optical fiber.

Preferably, the anti-resonant microstructure unit includes two layers of tangentially nested capillaries, and an included angle formed by connecting a circular center of an inner-layer capillary to the geometric center of the optical fiber and then to a circular center of an outer-layer capillary is an azimuthal angle. Except the marked anti-resonant microstructure unit, a position where capillaries of each of other anti-resonant microstructure units are tangential is attached to the inner wall of the cladding hollow-core sleeve, and the azimuthal angles of other anti-resonant microstructure units are 0°.

A method for preparing an azimuthally marked hollow-core optical fiber, provided in the present disclosure, includes the following steps:
Step 1: An anti-resonant microstructure unit with a nested structure is prepared: a desired capillary is formed by drawing a parent tube in a high-temperature drawing furnace; and the capillary may undergo secondary processing, such as cutting, polishing, and splicing, according to design requirements, so as to form an anti-resonant microstructure unit with a nested structure.
Step 2: A preform is formed by stacking: anti-resonant microstructure units with a nested structure obtained in step 1 are stacked and assembled in a sleeve, and m anti-resonant microstructure units with a nested structure are selected to deviate by an azimuthal angle during stacking as an identification of an azimuth of the hollow-core optical fiber, so as to form a preform of an azimuthally marked hollow-core optical fiber.
Step 3: A hollow-core optical fiber is formed by directly drawing the preform of the azimuthally marked hollow-core optical fiber obtained in step 2, or by drawing the preform into an intermediate preform first, inserting the preform into a sleeve, and then drawing the preform into the hollow-core optical fiber. In the process of drawing, by means of an azimuthal mark, a correspondence between the anti-resonant microstructure unit in the optical fiber and the anti-resonant microstructure unit in the preform can be distinguished quickly, so as to adjust a size of the anti-resonant microstructure unit in the optical fiber by controlling a magnitude of the gas pressure inside the anti-resonant microstructure unit in the preform.

Further, the anti-resonant microstructure unit, the sleeve, and the azimuthal mark may be made of a high-purity silica material, a doped quartz material (doped with one or more elements such as germanium, fluorine, chlorine, boron, or aluminum), a multicomponent glass material, a plastic material, and the like.

Further, the hollow-core optical fiber has a cladding diameter of greater than or equal to 100 um.

A method for end-face detection of the hollow-core optical fiber is provided, which includes the following steps:
(1) the azimuthally marked hollow-core optical fiber is cleaved at a preset position;
(2) an end face, obtained by performing cleaving in step (1), is imaged by using transmission light or reflected light, so as to obtain an image of the end face of the optical fiber at the position;
(3) an anti-resonant microstructure unit is identified according to an azimuthal angle on the image of the end face obtained in step (2), so as to obtain images of respective anti-resonant microstructure units; and
(4) geometric parameters are extracted from the images of the anti-resonant microstructure units obtained by performing identifying in step (3), so as to determine geometric uniformity of the hollow-core optical fiber.

Based on the geometric uniformity, the pressure of a gas introduced into individual regions of the anti-resonant microstructure units and into the sleeve when the hollow-core optical fiber is drawn can be adjusted, so as to control the drawing process of the optical fiber and improve the geometric uniformity of the optical fiber, thereby allowing the hollow-core optical fiber to have lower transmission loss and fusion-splicing loss.

The hollow-core optical fiber provided in the present disclosure has relatively low transmission loss, and the lowest transmission loss is ≤30 dB/km, more preferably ≤1 dB/km; and the hollow-core optical fiber has relatively low fusion-splicing loss, and the self-fusion-splicing loss is ≤0.5 dB.

Embodiments are as follows.

In order to make the objective, technical solutions, and advantages of the present disclosure clearer, the present disclosure will be further described below in detail in conjunction with embodiments. It should be appreciated that specific embodiments described herein are only intended for explaining rather than limiting the present disclosure. In addition, technical features in respective embodiments of the present disclosure described below may be combined with each other as long as no conflicts are resulted thereby.

### Embodiment 1

A structure of the hollow-core optical fiber provided in the present embodiment is as shown in Fig. 1, which includes a cladding hollow-core sleeve, and 5 circumferentially uniformly disposed anti-resonant microstructure units arranged on and attached to an inner wall of the cladding hollow-core sleeve, and a hollow area surrounded by the anti-resonant microstructure units is an optical fiber core; and the cladding hollow-core sleeve has a circular shape, and the plurality of anti-resonant microstructure units have the same outer profiles.

The anti-resonant microstructure unit has two layers of tangentially nested capillaries, and the azimuthal angle of the anti-resonant microstructure unit is an included angle formed by connecting three points: from a circular center of an inner-layer capillary to the geometric center of the optical fiber and then to a circular center of an outer-layer capillary. The single marked anti-resonant microstructure unit has an azimuthal angle Θ, and Θ=7.8°. Azimuthal angles of all other anti-resonant microstructure units are 0°, and a position where capillaries of each of other anti-resonant microstructure units are tangential is attached to the inner wall of the cladding hollow-core sleeve. The preparation method is as follows.

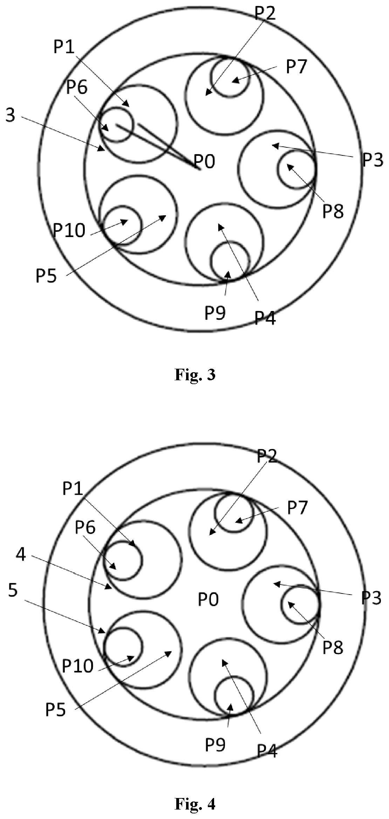

Two capillaries with different sizes are prepared by parent tubes. A larger capillary has an outer diameter of 10.4 mm and a wall thickness of 0.32 mm, and a smaller capillary has an outer diameter of 6.2 mm and a wall thickness of 0.34 mm. The smaller capillary is inserted into the larger capillary, and then is fixed by laser heating, so as to form an anti-resonant microstructure unit 1. A sleeve made of pure silica is prepared, and the sleeve has an outer diameter of 65 mm and an inner diameter of 55 mm. Five anti-resonant microstructure units 1 are stacked in the sleeve 2 to form a preform of the hollow-core optical fiber as shown in Fig. 1. The azimuthal angle Θ of a marked anti-resonant microstructure unit 3 is deviated in the process of stacking, Θ being 7.8°, and other azimuthal angles are maintained with the assembly error being ≤1.5°, so as to obtain a preform of an azimuthally marked hollow-core optical fiber. The preform of the azimuthally marked hollow-core optical fiber may be directly drawn into the hollow-core optical fiber in the optical fiber drawing furnace. However, when drawing is performed, due to temperature fluctuations, sizes of the anti-resonant microstructure units may vary. Imaging detection is as shown in Fig. 2, and the maximum deviation of the outer diameter of the anti-resonant microstructure unit is 25%. For this purpose, it is required to introduce a gas at different pressures into the anti-resonant microstructure unit, so as to make the size of the anti-resonant microstructure unit uniform. As shown in Fig. 3, the magnitude of the gas pressure required in the anti-resonant microstructure unit is identified by the azimuthal mark. P1, P2, P3, P4, and P5 respectively indicate the magnitude of the gas pressure in the larger capillary of each of the anti-resonant microstructure units, and the values are respectively 15.3 mbar, 15.5 mbar, 15.5 mbar, 15.8 mbar, and 15.2 mbar. P6, P7, P8, P9, and P10 respectively indicate the magnitude of the gas pressure in the smaller capillary of each of the anti-resonant microstructure units, and the values are respectively 64.3 mbar, 64.4 mbar, 64.9 mbar, 64.7 mbar, and 64.5 mbar. After the optical fiber is formed by drawing, the maximum deviation of the outer diameter of the larger capillary in the anti-resonant microstructure unit is 2.9%, the maximum deviation of the outer diameter of the smaller capillary in the anti-resonant microstructure unit is 3.3%, and the attenuation at 1550 nm is 0.58 dB/km. When the hollow-core optical fiber is fusion-spliced, the azimuth of the capillary may be distinguished by means of an azimuthally marked unit so as to realize more precise splicing, and the lowest fusion-splicing loss is 0.36 dB.

### Embodiment 2

A structure of the hollow-core optical fiber provided in the present embodiment is as shown in Fig. 4, which includes a cladding hollow-core sleeve, and 5 circumferentially uniformly disposed anti-resonant microstructure units arranged on and attached to an inner wall of the cladding hollow-core sleeve, and a hollow area surrounded by the anti-resonant microstructure units is an optical fiber core; and the cladding hollow-core sleeve has a circular shape, and the plurality of anti-resonant microstructure units have the same outer profiles.

The anti-resonant microstructure unit has two layers of tangentially nested capillaries, and an included angle formed by connecting a circular center of an inner-layer capillary to the geometric center of the optical fiber and then to a circular center of an outer-layer capillary is the azimuthal angle of the anti-resonant microstructure unit. Two adjacent marked anti-resonant microstructure units 4, 5 are used, and the azimuthal angles Θ thereof are respectively 11.2° and 9.4°. Azimuthal angles of all other anti-resonant microstructure units are 0°, and a position where capillaries of each of other anti-resonant microstructure units are tangential is attached to the inner wall of the cladding hollow-core sleeve. The preparation method is as follows.

Two capillaries with different sizes are prepared by parent tubes. A larger capillary has an outer diameter of 8.2 mm and a wall thickness of 0.62 mm, and a smaller capillary has an outer diameter of 4.15 mm and a wall thickness of 0.44 mm. The smaller capillary is inserted into the larger capillary, and then is fixed by laser heating, so as to form an anti-resonant microstructure unit 1. A sleeve made of pure silica is prepared, and the sleeve has an outer diameter of 55 mm and an inner diameter of 45 mm. Five anti-resonant microstructure units 1 are stacked in the sleeve 2 to form a preform of the hollow-core optical fiber as shown in Fig. 4. Azimuthal angles Θ of two anti-resonant microstructure units (4 and 5) are deviated in the process of stacking, the azimuthal angle Θ of the anti-resonant microstructure unit 4 being 11.2°, the azimuthal angle Θ of the anti-resonant microstructure unit 5 being 9.4°, and other azimuthal angles are maintained to be ≤1.5°, so as to obtain a preform of an azimuthally marked hollow-core optical fiber. The preform of the azimuthally marked hollow-core optical fiber may be first drawn into an intermediate preform in the optical fiber drawing furnace, an outer diameter of the intermediate preform being 7.5 mm, and the intermediate preform is inserted into a sleeve having an outer diameter of 14.2 mm and an inner diameter of 8.1 mm and is drawn. Like in the above embodiment, a gas at different pressures is introduced into the anti-resonant microstructure unit, so as to make the size of the anti-resonant microstructure unit uniform. As shown in Fig. 4, the magnitude of the gas pressure required in the anti-resonant microstructure unit is identified by an azimuthally marked unit. P1, P2, P3, P4, and P5 respectively indicate the magnitude of the gas pressure in the larger capillary of each of the anti-resonant microstructure units, and the values are respectively 29.9 mbar, 29.8 mbar, 30.2 mbar, 30.3 mbar, and 30.4 mbar. P6, P7, P8, P9, and P10 respectively indicate the magnitude of the gas pressure in the smaller capillary of each of the anti-resonant microstructure units, and the values are respectively 112.5 mbar, 112.1 mbar, 113.2 mbar, 112.7 mbar, 113.2 mbar. After the optical fiber is formed by drawing, the maximum deviation of the outer diameter of the larger capillary in the anti-resonant microstructure unit is 2.7%, the maximum deviation of the outer diameter of the smaller capillary in the anti-resonant microstructure unit is 2.8%, and the attenuation at 1550 nm is 0.46 dB/km. When the hollow-core optical fiber is fusion-spliced, the azimuth of the capillary may be distinguished by means of the azimuthally marked unit so as to realize more precise splicing, and the lowest fusion-splicing loss is 0.25 dB.

### Embodiment 3

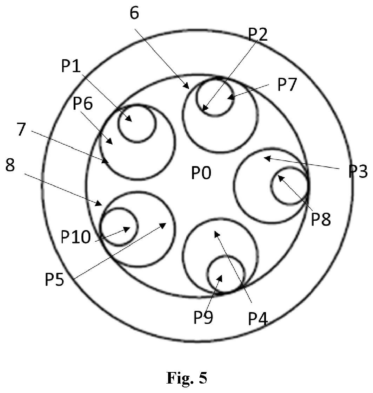

A structure of the hollow-core optical fiber provided in the present embodiment is as shown in Fig. 5, which includes a cladding hollow-core sleeve, and 5 circumferentially uniformly disposed anti-resonant microstructure units arranged on and attached to an inner wall of the cladding hollow-core sleeve, and a hollow area surrounded by the anti-resonant microstructure units is an optical fiber core; and the cladding hollow-core sleeve has a circular shape, and the plurality of anti-resonant microstructure units have the same outer profiles.

The anti-resonant microstructure unit has two layers of tangentially nested capillaries, and the azimuthal angle of the anti-resonant microstructure unit is an included angle formed by connecting three points: from a circular center of an inner-layer capillary to the geometric center of the optical fiber and then to a circular center of an outer-layer capillary. Three adjacent marked anti-resonant microstructure units 6, 7, 8 are used, and the azimuthal angles Θ thereof are respectively 6.4°, 7.2° and 7.8°. Azimuthal angles of all other anti-resonant microstructure units are 0°, and a position where capillaries of each of other anti-resonant microstructure units are tangential is attached to the inner wall of the cladding hollow-core sleeve. The preparation method is as follows.

As shown in Fig. 5, two capillaries with different sizes are prepared by parent tubes. A larger capillary has an outer diameter of 6.6 mm and a wall thickness of 0.37 mm, and a smaller capillary has an outer diameter of 2.8 mm and a wall thickness of 0.24 mm. The smaller capillary is inserted into the larger capillary, and then is fixed by laser heating, so as to form an anti-resonant microstructure unit 1. A sleeve made of pure silica is prepared, and the sleeve has an outer diameter of 27 mm and an inner diameter of 21 mm. Five anti-resonant microstructure units 1 are stacked in the sleeve 2 to form a preform of the hollow-core optical fiber as shown in Fig. 5. Azimuthal angles Θ of three anti-resonant microstructure units (6, 7 and 8) are deviated in the process of stacking, the azimuthal angle Θ of the anti-resonant microstructure unit 6 being 6.4°, the azimuthal angle Θ of the anti-resonant microstructure unit 7 being 7.2°, the azimuthal angle Θ of the anti-resonant microstructure unit 8 being 7.8°, and other azimuthal angles are maintained to be ≤1.5°, so as to obtain a preform of an azimuthally marked hollow-core optical fiber. The preform of the azimuthally marked hollow-core optical fiber may be first drawn into an intermediate preform in the optical fiber drawing furnace, an outer diameter of the intermediate preform being 10.5 mm, and the intermediate preform is inserted into a sleeve having an outer diameter of 18.2 mm and an inner diameter of 11.0 mm and is drawn. Like in the above embodiment, a gas at different pressures is introduced into the anti-resonant microstructure unit, so as to make the size of the anti-resonant microstructure unit uniform. As shown in Fig. 5, the magnitude of the gas pressure required in the anti-resonant microstructure unit is identified by an azimuthally marked unit. P1, P2, P3, P4, and P5 respectively indicate the magnitude of the gas pressure in the larger capillary of each of the anti-resonant microstructure units, and the values are respectively 46.2 mbar, 46.9 mbar, 47.6 mbar, 46.3 mbar, and 46.5 mbar. P6, P7, P8, P9, and P10 respectively indicate the magnitude of the gas pressure in the smaller capillary of each of the anti-resonant microstructure units, and the values are respectively 156.3 mbar, 157.4 mbar, 159.4 mbar, 158.5 mbar, and 157.9 mbar. After the optical fiber is formed by drawing, the maximum deviation of the outer diameter of the larger capillary in the anti-resonant microstructure unit is 3.1%, the maximum deviation of the outer diameter of the smaller capillary in the anti-resonant microstructure unit is 3.4%, and the attenuation at 1550 nm is 0.43 dB/km. When the hollow-core optical fiber is fusion-spliced, the azimuth of the capillary may be distinguished by means of the azimuthally marked unit so as to realize more precise splicing, and the lowest fusion-splicing loss is 0.27 dB.

It is easily appreciated by those skilled in the art that, the above description merely involves preferred embodiments of the present disclosure, and is not intended to limit the present disclosure. Any modifications, equivalent replacements, and improvements made within the spirit and principle of the present disclosure shall be included in the protection scope of the present disclosure.

## Claims

1. An azimuthally marked hollow-core optical fiber, **characterized in that**, comprising:
a cladding hollow-core sleeve, and
a plurality of circumferentially uniformly disposed anti-resonant microstructure units arranged on and attached to an inner wall of the cladding hollow-core sleeve, wherein a hollow area surrounded by the anti-resonant microstructure units is an optical fiber core;
the anti-resonant microstructure unit has multiple negative-curvature layers, a side away from the optical fiber core being defined as an inner side and a side close to the optical fiber core being defined as an outer side, and an azimuthal angle is an included angle formed by connecting three points: from a curvature center of an outermost negative-curvature layer to the geometric center of the optical fiber and then to a curvature center of an innermost negative-curvature layer;
there is a difference between an azimuthal angle of at least one anti-resonant microstructure unit and an azimuthal angle of at least one other anti-resonant microstructure unit.

2. The azimuthally marked hollow-core optical fiber according to claim 1, **characterized in that**, the difference between azimuthal angles is ≥1.5°.

3. The azimuthally marked hollow-core optical fiber according to claim 1 or claim 2, **characterized in that**, there is a difference between an azimuthal angle of a marked anti-resonant microstructure unit and azimuthal angles of all other anti-resonant microstructure units.

4. The azimuthally marked hollow-core optical fiber according to claim 3, **characterized in that**, the azimuthal angles of all other anti-resonant microstructure units are the same.

5. The azimuthally marked hollow-core optical fiber according to claim 4, **characterized in that**, the azimuthal angles of all other anti-resonant microstructure units are 0°.

6. The azimuthally marked hollow-core optical fiber according to claim 3, **characterized in that**, the azimuthal angle of the marked anti-resonant microstructure unit is Θ, wherein 1.5°≤Θ≤45°.

7. The azimuthally marked hollow-core optical fiber according to claim 3, **characterized in that**, the anti-resonant microstructure unit comprises two layers of tangentially nested capillaries, wherein the azimuthal angle of the anti-resonant microstructure unit is an included angle formed by connecting three points: from a circular center of an inner-layer capillary to the geometric center of the optical fiber and then to a circular center of an outer-layer capillary.

8. The azimuthally marked hollow-core optical fiber according to claim 7, **characterized in that**, a position where capillaries of each of other anti-resonant microstructure units are tangential is attached to the inner wall of the cladding hollow-core sleeve.

9. The azimuthally marked hollow-core optical fiber according to claim 1, **characterized in that**, the cladding hollow-core sleeve has a circular shape, and the plurality of anti-resonant microstructure units have the same outer profiles.

10. A method for end-face detection of the hollow-core optical fiber according to any one of claims 1 to 9, **characterized in that**, comprising the following steps:
(1) cleaving the azimuthally marked hollow-core optical fiber at a preset position;
(2) imaging an end face, obtained by performing cleaving in step (1), by using transmission light or reflected light, so as to obtain an image of the end face of the optical fiber at the position;
(3) identifying an anti-resonant microstructure unit according to an azimuthal angle on the image of the end face obtained in step (2), so as to obtain images of respective anti-resonant microstructure units; and
(4) extracting geometric parameters from the images of the anti-resonant microstructure units obtained by performing identifying in step (3), so as to determine geometric uniformity of the hollow-core optical fiber.
